# EUROPEAN PATENT SPECIFICATION

(11) **EP 0 975 481 B1**
(45) Date of publication and mention of the grant of the patent: **31.10.2001**
(21) Application number: 97928419.7
(22) Date of filing: 09.06.1997
(51) Int. Cl.: B60K 15/03, B60K 15/07, B60K 15/073

(54) **LIQUID GAS TANK FOR MOTOR VEHICLES**
FLÜSSIGGASTANK FÜR FAHRZEUGE
RESERVOIR DE GAZ LIQUEFIE DESTINE A DES VEHICULES A MOTEUR

(30) Priority: 14.04.1997 IT MI970857
(43) Date of publication of application: 02.02.2000
(73) Proprietor: Dav d'Ippolito Antonino, 20070 Villanova del Sillario (IT)
(72) Inventor: D'IPPOLITO, Antonino, I-20070 Villanova del Sillario (IT)
(74) Representative: Filippi, Remo
(86) International application number: IT9700129
(87) International publication number: WO9846443

(56) References cited:
- EP-A- 0 046 621
- EP-A- 0 068 473
- EP-A- 0 473 555
- FR-A- 2 481 773
- FR-A- 2 585 446

## Description

Tanks made to hold liquid gas for motor vehicles are well known accessories, especially a flat kind obtainable by geometrically flattening cylindrical, spherical, toroidal, elliptical structures or other possible shapes.

When flattened such tanks can more easily be stowed inside a vehicle and can occupy space often left empty or even space intended for other purposes such as for a spare wheel.

Obviously the most important requisite for a tank is that of safety as there is always some, even if remote, possibility of inside pressure exceeding normal values.

Tanks must therefore be strongly built and of a size that allows for an anomalous increase in pressure which, though a rare occurrence, cannot be either underestimated or overlooked.

This means that weights, bulk and costs are all greater than would be needed if design had only to take normal pressure levels into account.

The European Union has issued a regulation (E 67) that includes rules for construction of tanks for liquid petroleum gas (LPG) for the engines of vehicles; these rules not only specify materials, type of steel, radii of curvature, class of tank, etc; but also require destruction testing of one tank out of a batch of 200.

This test provides a variety of data but also stability of the receptacle at 4500 kPa, bursting point at a value not less than 10,125 kPa and 17% expansion of the volume that point.

Up to now no circular, toroidal, elliptical or flattened form of any kind has received E 67 approval as no one has succeeded in combining stability at 4500 kPa with the figure for volumetric expansion.

Exploiting the features of the flat form, the above invention solves a hitherto unsolved problem of providing a structure that, while made for normal pressure values, offers maximum safety should a rise in pressure take place, as will be explained below.

Subject of the invention is a flat tank to hold liquid gas for motor vehicles consisting of two opposing shell-shaped structures internally connected by an axial pulling system comprising one or more stays. A tank of this type is shown by FR-A-2 481 773.

The materials used for the stays and the size of their minimum overall cross section are such that, if gas pressure rises for any reason, the stays spontaneously break causing free outward axial expansion of the tank and so creating extra volume to absorb increased pressure of gas.

In one type of execution in each opposing shell is a large central hole closed by a welded flange with truncated-cone-shaped inward-facing walls.

The stay for the pulling arrangement is an axial tubular body, whose ends are welded to said flanges, having in it a series of holes, at an equal angular distance, on a transversal midway geometrical plane where the transversal area is smallest.

As the case may require, the tubular body can be cylindrical or present a diverging symmetrical double taper of increasing value whose edges, at the two ends, are substantially parallel to the conical walls of the flanges.

In another execution the pulling arrangement consists of a set of parallel rods placed, at an equivalent angular distance, on an anxial geometrical cylindrical surface that passes through the flanges at the position of the truncated-cone-shaped walls, their ends being welded to said flanges.

In yet another execution at the centre of the two opposing shells is a depression with arched walls, a central hole being made in each shell.

The stay for the pulling system is a rod with a head at each end, these having tips that respectively penetrate into one hole and into the other in each shell, held in place by welds on the edges of said holes at the base, of a larger diameter, of said tips.

The central section of the rod, formed of an annular channel, is smaller.

The tips of the heads on the rod may consist of extensions of said rod after passing through a ring welded on the rod close to said tips, or may consist of extensions, of a smaller diameter, at the two ends of the rod.

In another execution the two opposing shells have at their centres an inward-facing depression with arched sides and a central hole.

The stay for the pulling system is a rod that passes through said holes and has, respectively at each end, a truncated-cone-shaped head housed externally on the sides of said depression in the shells.

These heads, one at each end, have concave sides of substantially the same curve as the arched sides of the depressions, their minimum diameter corresponding to the diameter of said holes and maximum diameter substantially corresponding to the geometrical transversal section of said depression at the free ends of said two heads.

The minimum central cross section of said rod is formed of an annular channel.

In another execution the stays forming the pulling system are two U-shaped bars crossing over at the bottom with ends that, passing through holes made in the shells, emerge on said shells' surfaces and are welded at that point.

The invention offers evident advantages.

Since an anomalous increase in pressure causes spontaneous breakage of the stays allowing the two shells to expand outwards so forming additional volume to absorb the extra pressure, the tank can be designed for normal pressure values instead of for much higher ones which though of rare occurrence, can never be entirely ruled out.

The tank here invented is therefore lighter, more compact and less costly than present ones as the described arrangements for internal pull are obtained using simple light-weight means that are compact and easy to fit inside the tank.

This tank is consequently of a simple construction, compact, light in weight and limited in cost especially in relation to the degree of absolute operational safety it offers.

The described invention in particular overcomes the present limits imposed by the E 67 regulation and reaches values of volumetric expansion of not less than 35%.

Characteristics and purposes of the invention will be made still clearer by the following examples of its execution illustrated by diagrammatically drawn figures

Fig.1 Tank for liquid gas formed of two shell-shaped parts, with opposing concave internal central flanges and cylindrical tubular internal stays; a diametral cross section.

Fig.2 An exploded view of the above cross section.

Fig.3 Tank for liquid gas formed of two shell-shaped parts, with opposing concave internal central flanges and an internal tubular stay of a symmetrical diverging double-taper of increasing value; a diametral cross section.

Fig.4 Tank for liquid gas formed of two shell-shaped parts, with opposing concave internal central flanges and an internal stay consisting of a set of parallel rods resting on an axial geometrical cylinder.

Fig.5 Tank for liquid gas formed of two shell-shaped parts and an internal stay consisting of a rod with a head of a larger diameter at each end; a diametral cross section.

Fig.6 Tank for liquid gas formed of two shell-shaped parts and an internal stay consisting of a rod with a head of a smaller diameter at each end; a diametral cross section.

Fig.7 Tank for liquid gas formed of two shell-shaped parts with internal stay consisting of an inner rod having external heads at each end.

The tank 10 comprises a shell 11 and another shell 11' with an edge 12 applied by welding 13, shell edges being associated by a weld 14.

The shells present large axial holes 15, 15' on whose edges the truncated-cone shaped flanges 16, 16' are applied by a weld 20, said flanges having a flat central part 17 and edges 18 of reduced taper and having ringwise seats 19 one opposite the other.

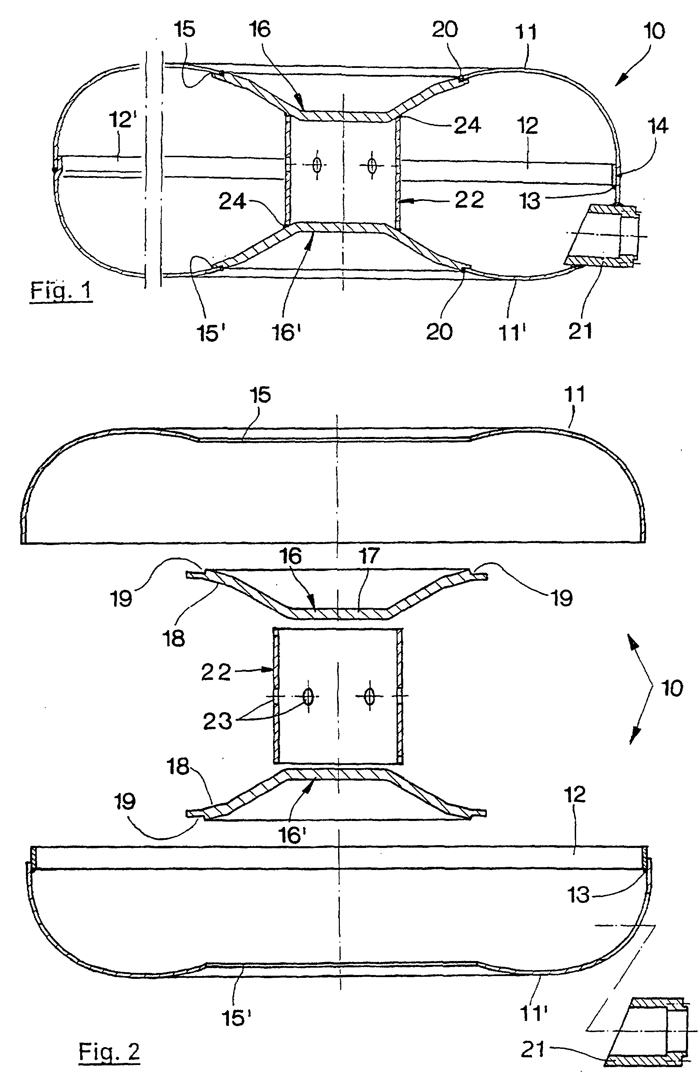

On the left of Fig.1 a variant is shown, this having an edge 12' in one piece with the shell 11'.

The lower shell 11' exhibits a peripherically welded nozzle 12.

The two shells, welded 24 at the centre, are internally connected by a cylindrical tubular stay 22.

Strength of reaction of said stay 22 is decided by a set of holes 23 passing through it about halfway up its height.

If internal pressure exceeds a previously set value, the stay 22 breaks at the holes 23 allowing the tank, and gas, to expand and avoiding an explosion.

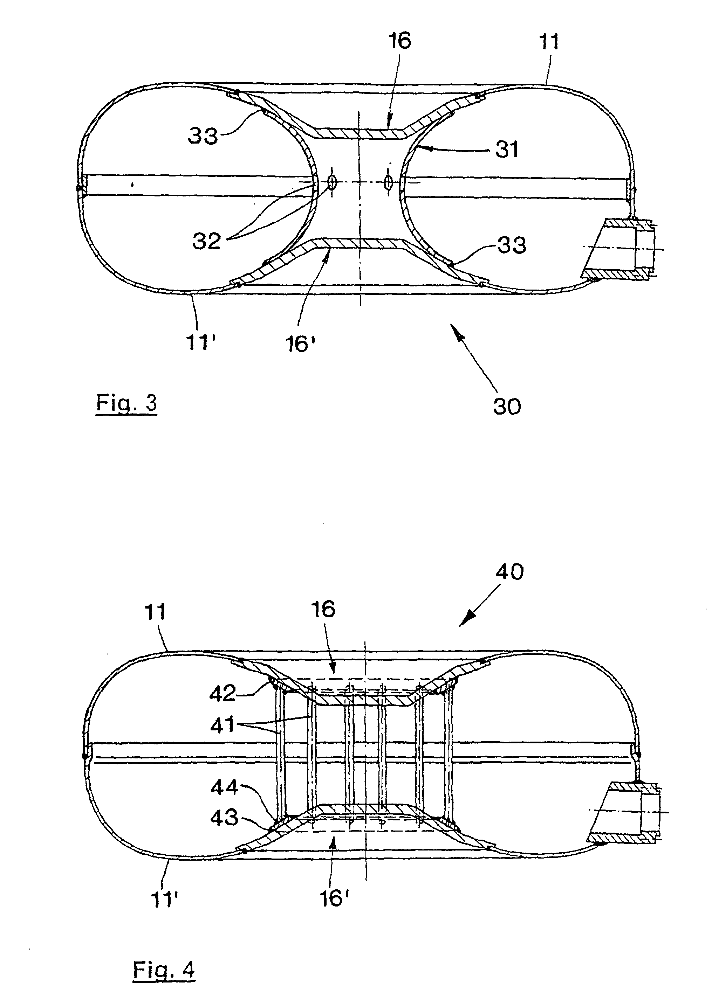

Fig. 3 shows a tank 30 substantially the same as the described tank 10 except that the two shells 11, 11' are joined internally , with a weld 33, by a tubular stay 31 of a diverging symmetrical double taper of increasing value.

Here too there are cenetrally placed holes 32.

Fig. 4 illustrates a tank 40 substantially similar to tanks 10, 30 except that the two shells 11, 11' are joined by a series of stays 41 parallel to the axis of the tank and standing on an axial geometrical cylindrical surface passing across the truncated-cone shaped surface of the opposing flanges.

Said stays are joined to the flanges by heads 42 at their ends and by welds 43, 44.

If internal pressure exceeds a previously set level the stays 41 break allowing the tank, and gas, to expand and therefore avoiding an explosion.

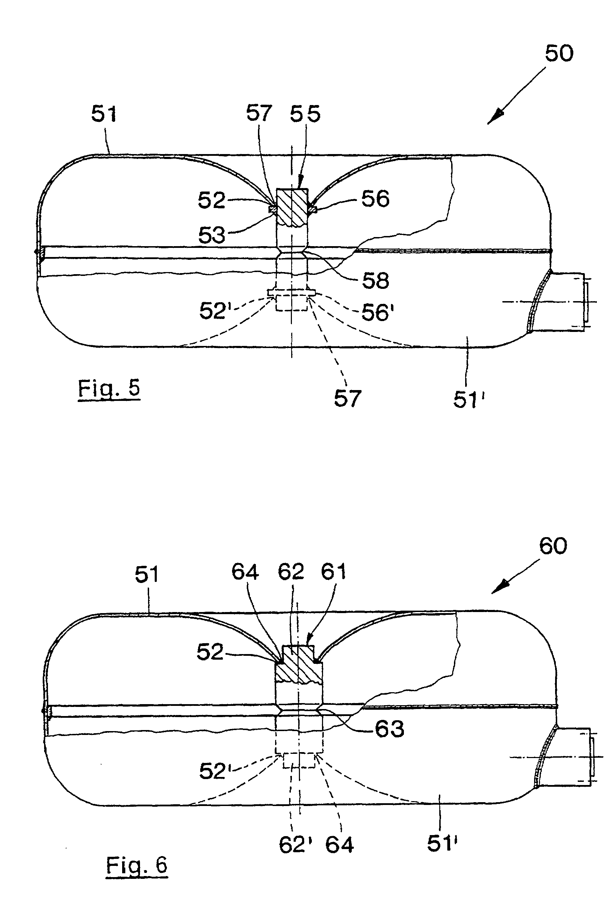

Fig. 5 illustrates a tank 50 formed of two shell-shaped parts 51, 51' substantially the same as those previously described 11, 11' the difference being that they present a small axial hole 52, 52'.

The shells are joined axially by a stay 55 formed of a rod with a head 56, 56' of a larger diameter at each end, created by two welded rings at 53, and with an annular channel 58 half way up its length.

The rims of the axial holes 52, 52' are joined by welds 57 to the rod 55 at the position of the heads 56, 56'.

If internal pressure exceeds a previously set level the rod 55 breaks through at the channel 58 allowing the tank, and gas, to expand and therefore avoiding an explosion.

Fig. 6 shows a tank 60 substantially the same as the preceding one except that the two shells 51, 51' are joined by a central stay 61 having a head of lesser diameter at each end, respectively 62 and 62', and having an annular channel 63 half way up its length.

The rims of holes 52, 52' in the shells 51, 51' are joined to the base of said heads by welds 64.

If internal pressure exceeds a previously set level the stay 61 breaks through at the position of the channel 63 allowing the tank, and gas, to expand and so avoiding an explosion.

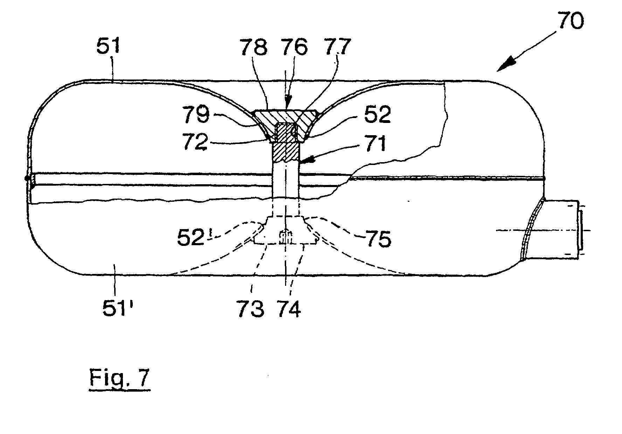

Fig. 7 shows a tank 70 substantially the same as the preceding one, the difference being that the internal stay consists of a rod 71 with thread 72, one head 73 and a second head 76 screwed on at the threaded end of said rod.

The head 73 has a flat end 74 and a tapered body whose internal cavity 75 substantially matches with the convexity of the shells 51, 51' at the position of the central holes 52, 52'.

The second head 76 presents a thread 77 in a blind axial hole and, similarly, a flat end 78 and tapered body whose concave surface 79 substantially matches with the convexity of the shells 51, 51'.

If internal pressure exceeds a certain value the rod 71 breaks allowing the tank, and gas, to expand and therefore avoiding an explosion.

## Claims

1. Flat tank (10, 30, 40, 50, 60, 70) to hold liquid gas for motor vehicles, formed of two opposing shell-shaped parts (11, 11', 51, 51') internally joined by an axial pulling system consisting of one or more stays (22, 31, 41, 55, 61, 71) made of a material, and their overall minimum cross sections being of a size, said material and said size being predetermined, so that in the event of an anomalous increase in pressure of gas, said stays will spontaneously break permitting free outward axial expansion of the tank (10, 30, 40, 50, 60, 70) and an increase in its volume compensating for the anomalous rise in gas pressure, **characterized in that** the two opposing shell-shaped parts have a central depression with arched concave walls.

2. Tank (10,) as in claim 1,
**characterized in that** the central depression in the two opposing shells (11, 11') is obtained by a large central hole (15, 15') closed at welds (20) by a flange (16, 16') having truncated-cone shaped walls (18), internally concave, the stays being formed of an axial tubular body, whose ends are joined by welds (24) to said flanges (16,16'), in which body, on a transversal geometrical middle plane where the section of the transversal area is smallest, is a series of holes (23) set at an equal angular distance.

3. Tank (10) as in claim 2,
**characterized in that** the tubular body (22) is cylindrical.

4. Tank (30) as in claim 2,
**characterized in that** the tubular body (31) presents a diverging symmetrical double taper of increasing value whose edges, at the two ends, are substantially parallel to the conical walls of the flanges (16, 16')

5. Tank (40) as in claim 1,
**characterized in that** the central depression in the two opposing shells (11, 11') is obtained by a large central hole (15, 15') each closed, at welds (20), by an inwardly-concave truncated-cone shaped flange (16, 16'), the pulling system consisting of a series of parallel rods (41) positioned, at an equivalent angular distance, on an axial geometrical cylindrical surface that passes through the flanges at their truncated-cone shaped walls, the rod ends being connected to said flanges by their heads and by welds (44).

6. Tank (50, 60) as in claim 1,
**characterized in that** the two opposing shells (51, 51') present at the centre of their depression a central hole (52, 52'), the stay for the pulling system consisting of a rod (55, 61) with two end heads (56, 56', 62, 62') having tips that penetrate respectively in one and another of said holes in the shells, said heads being stabilized by welds (57, 64) made on the edges of said holes at the position of the heads (56, 56'), of greater diameter than said tips, said rod having in it a middle area of minimum transversal section created by an annular channel (58, 63).

7. Tank (50) as in claim 6,
**characterized in that** the heads (56, 56') of the rod (55) are formed of two rings welded on at each end, the tips of these annular heads consisting of extensions of said rod at both ends after passing through said annular heads.

8. Tank (60) as in claim 6,
**characterized in that** the tips (62, 62') of the head (61) of the rod consist of extensions of the rod at both ends, diameter of said extensions being less than that of the rod itself.

9. Tank (70) as in claim 1,
**characterized in that** the two opposing shells (51, 51') present at the centre of their depression a central hole (52, 52'), the stay of the pulling system consisting of an internal rod (71) with at each end a truncated-cone shaped head (73, 76), which heads are opposed one to another and are externally lodged on the edges of the holes in said depressions, said heads presenting curved sides (75, 79) of a curvature substantially the same as that of the arched walls of said depressions, a minimum diameter corresponding to the diameter of said holes and a maximum diameter corresponding to the geometrical cross section of said depression at the free end of said heads (73, 76).

## Patentansprüche

1. Tank (10, 30, 40, 50, 60, 70) für Flüßiggas, flach, für KFZ, mit folgenden Charakteristiken: zusammengesetzt aus zwei gegenübergestellten Kappen (11, 11', 51, 51'), die innen verbunden sind, u.z. in Übereinstimmung ihrer zentralen Vertiefung mit orangen hohlen Seitenwänden, und aus einem axialen Zugsystem mit einer oder mehr Zugstangen (22, 31, 41, 55, 61, 71), aus vorbestimmten Material und mit einer vorbestimmten Bemessung ihres Gesamtmindestquerschnitts hergestellt, wobei das Material und die Bemessung so entwickelt sind, daß sie im Fall von einer außergewöhnlichen Zunahme des Gasdrucks den spontanen Bruch der genannten Zugstangen ermöglichen, was daher zu einer freien axialen Verformung nach außen des Tanks (10, 30, 40, 50, 60, 70) und zu einer Volumenzunahme führt, die diese ungewöhnliche Gasdruckzunahme kompensieren.

2. Tank (10) wie nach Forderung 1),
mit folgenden Charakteristiken: die zentrale Vertiefung der beiden gegenübergestellten Kappen (11, 11') wird durch ein großes zentrales Loch (15, 15') erhalten, das durch ein Flansch (16, 16') durch Schweißungen (20) geschlossen ist, mit kegelstumpfen, nach innen hohlen Seitenwänden (18), wobei das Zugstangensystem durch einen schlauchförmigen axialen Körper hergestellt ist, dessen Enden durch Schweißungen (24) an die genannten Flanschen (16, 16') befestigt sind und der in Übereinstmmung mit einer geometrischen, mittleren Querebene, die dem Mindestquerschnitt entspricht, eine Serie von Bohrungen (23) zu gleichen Winkelabständen aufweist.

3. Tank (10) wie nach Forderung 2),
mit folgenden Charakteristiken: der schlauchförmige Körper (22) ist zylinderförmig.

4. Tank (30) wie nach Forderung 2),
mit folgenden Charakteristiken: der schlauchförmige Körper (31) hat eine doppelte symmetrische Konizität mit ansteigendem Wert, divergent, mit Rändern an den , beiden Enden, im Wesentlichen parallel zu den kegelförmigen Wänden der Flanschen (16, 16').

5. Tank (40) wie nach Forderung 1),
mit folgenden Charakteristiken: die zentrale Vertiefung der beiden gegenübergestellten Kappen (11, 11') wird durch ein großes zentrales Loch (15, 15') erhalten, das durch ein kegelstumpfes Flansch (16, 16') mit nach innen hohler Wand durch Schweißungen (20) geschlossen ist, wobei das Zugstangensystem aus einer Serie von kleinen parallelen Stangen (41) besteht, die im gleichen Winkelabstand auf einer axialen, geometrischen, zylindrischen Fläche liegen, die die Flanschen in Übereinstimmung mit ihren kegelstumpfen Wänden durchgeht, dessen Enden mit diesen Flanschen verbunden sind, u.z. durch Endköpfen und Schweißungen (44).

6. Tank (50, 60) wie nach Forderung 1),
mit folgenden Charakteristiken: die beiden gegenübergestellten Kappen (51, 51') weisen in Übereinstimmung mit der Mitte ihrer Vertiefung eine zentrale Bohrung (52, 52') auf, wobei die Zugstange des Zugsystems aus einer kleinen Stange (55, 61) besteht, die am Ende mit zwei Köpfen (56, 56', 62, 62') versehen ist, dessen Spitzen jeweils in die beiden Bohrungen der Hauben eindringen, wobei diese Köpfe durch die Schweißungen (57, 64) befestigt bleiben, die Stange ist so an den Rändern der genannten Bohrungen in Übereinstimmung mit den Köpfen (56, 56') vorbereitet, daß der Durchmesser größer als die genannten Spitzen ist, da die Stange mit einer Mindestquerschnittmittellinienzone, die durch einen Ringkanal (58, 63) erhalten ist, ausgerüstet ist.

7. Tank (50) wie nach Forderung 6),
mit folgenden Charakteristiken: die Köpfe (56, 56') der kleinen Stange (55) sind durch zwei Ringe erhalten, die auf die Enden geschweißt wurden, die Spitzen der genannten Köpfe sind ringförmig, bestehend aus Verlängerungen der Enden der kleinen Stange selbst nach Durchgang der ringförmigen Köpfe selbst.

8. Tank (60) wie nach Forderung 6),
mit folgenden Charakteristiken: die Spitze (62, 62') des Kopfs (61) der kleinen Stange besteht aus Verlängerungen der Stange an ihren beiden Enden, wobei der Durchmesser der Verlängerungen kleiner als der Durchmesser der kleinen Stange selbst ist.

9. Tank (70) wie nach Forderung 1),
mit folgenden Charakteristiken: die beiden gegenübergestellten Kappen (51, 51') weisen in Übereinstimmung mit der Mitte ihrer Vertiefung eine zentrale Bohrung (52, 52') auf, wobei die Zugstange des Zugsystems aus einer kleinen inneren Stange (71) besteht, die an jedem ihrer beiden Enden einen kegelstumpfen Kopf (73, 76) hat, wobei die Köpfe gegenübergestellt sind und außen auf den Rändern der Bohrungen dieser Vertiefungen untergebracht sind, die hohle Seiten (75, 79) aufweisen, die im Wesentlichen die gleiche Krümmung wie die gebogenen Wände der Vertiefungen selbst haben, ein Mindestdurchmesser, der dem Durchmesser dieser Bohrungen entspricht, und ein maximaler Durchmesser, der dem geometrischen Querschnitt der Vertiefung selbst, in Übereinstimmung mit den freien Enden dieses Kopfs (73, 76), entspricht.

## Revendications

1. Réservoir (10, 30, 40, 50, 60, 70) de gaz liquides, plat, pour véhicules, **caractérisé par le fait qu'**il est formé par deux calottes (11, 11', 51, 51') opposées, reliées à l'intérieur, en correspondance de leur dépression centrale, à des parois arquées concaves, et par un système axial de traction à un ou plusieurs tirants (22, 31, 41, 55, 61, 71) obtenu à partir d'un matériau et avec un dimensionnement de leur plus petite section transversale totale, ce matériau et ce dimensionnement étant déterminés de façon à permettre, dans le cas d'une augmentation anormale de la pression du gaz, la cassure spontanée desdits tirants et par conséquent la libre déformation axiale du réservoir (10, 30, 40, 50, 60, 70) vers l'extérieur et une augmentation volumétrique compensatoire de cette augmentation anormale de la pression du gaz.

2. Réservoir (10) conformément à la revendication 1)
**caractérisé par le fait que** la dépression centrale des deux calottes (11, 11') opposées est formée par un grand trou central (15, 15') fermé au moyen de soudures (20) par une flasque (16,16') aux parois tronconiques (18) concaves vers l'intérieur, le système de tirants étant obtenu d'un corps tubulaire axial dont les extrémités sont reliées par des soudures (24) auxdites flasques (16,16'), système qui présente en correspondance d'un plan géométrique transversal médian correspondant à la zone transversale de plus petite section, une série de trous (23), à distance angulaire égale.

3. Réservoir (10) conformément à la revendication 2),
**caractérisé par le fait que** le corps (22) tubulaire est cylindrique.

4. Réservoir (30) conformément à la revendication 2)
**caractérisé par le fait que** le corps (31) tubulaire présente une double conicité symétrique, de valeur croissante, divergente, avec des bords aux deux extrémités pratiquement parallèles aux parois coniques des flasques (16, 16').

5. Réservoir (40) conformément à la revendication 1)
**caractérisé par le fait que** la dépression centrale des deux calottes (11, 11') opposées est obtenue d'un grand trou central (15, 15') fermé, au moyen de soudures (20), par une flasque tronconique (16, 16') concave vers l'intérieur, le système de traction étant formé par une série de tiges (41) parallèles posées, à distance angulaire égale, sur une surface cylindrique géométrique axiale qui traverse les flasques en correspondance de leurs parois tronconiques et dont les extrémités sont reliées auxdites flasques par des têtes d'extrémité et des soudures (44).

6. Réservoir (50, 60) conformément à la revendication 1),
**caractérisé par le fait que** les deux calottes (51, 51') opposées présentent, en correspondance de leur dépression, un trou (52, 52') central, le tirant du système de traction étant formé d'une tige (55, 61) munie de deux têtes (56, 56', 62, 62') d'extrémité dont les pointes pénètrent respectivement dans l'un et l'autre des trous des calottes, ces têtes étant rendues stables par des soudures (57, 64) ménagées sur les bords desdits trous correspondant aux têtes (56, 56'), d'un diamètre supérieur à celui des pointes, ladite tige comportant une zone médiane transversale de petite section formée par un canal (58, 63) annulaire.

7. Réservoir conformément à la revendication 6),
**caractérisé par le fait que** les têtes (56, 56') de la tige (55) sont formées par deux anneaux soudés à son extrémité, les pointes desdites têtes annulaires étant constituées par des prolongements des extrémités de la tige, traversant lesdites têtes annulaires.

8. Réservoir (60) conformément à la revendication 6),
**caractérisé par le fait que** la pointe (62, 62') de la tête (61) de la tige est constituée par des prolongement des extrémités de la tige dont le diamètre est inférieur à celui de ladite tige.

9. Réservoir (70) conformément à la revendication 1),
**caractérisé par le fait que** les deux calottes (51, 51') opposées présentent, en correspondance du centre de leur dépression, un trou central (52, 52') le tirant du système de traction étant constitué par une tige (71) intérieure, munie, à chacune de ses extrémités, d'une tête (73, 76) tronconique, lesquelles têtes s'opposent et se logent extérieurement sur les bords des trous desdites dépressions, présentant des flancs concaves (75, 79) ayant pratiquement la même courbure que les parois arquées desdites dépressions, un diamètre minimum correspondant au diamètre des trous et un diamètre maximum correspondant à la section transversale géométrique de la dépression en correspondance de l'extrémité libre desdites têtes (73, 76).
